# EUROPÄISCHE PATENTSCHRIFT

(11) **EP 2 399 722 B1**
(45) Veröffentlichungstag und Bekanntmachung des Hinweises auf die Patenterteilung: **10.07.2019**
(21) Anmeldenummer: 11005018.4
(22) Anmeldetag: 21.06.2011
(51) Int. Cl.: B29C 51/12, B29C 69/00, B29C 51/26

(54) **Verfahren zur Herstellung von Hohlkörpern aus thermoplastischem Kunststoff sowie Vorrichtung zur Durchführung des Verfahrens**
Method for producing hollow bodies from thermoplastic and a device for carrying out the method
Procédé de fabrication de corps creux en matière thermoplastique et dispositif d'exécution du procédé

(30) Priorität: 24.06.2010 DE 102010025006
(43) Veröffentlichungstag der Anmeldung: 28.12.2011
(73) Patentinhaber: Kautex Textron GmbH & Co. KG, 53229 Bonn (DE)
(72) Erfinder: Borchert, Matthias, 53179 Bonn (DE); Mehren, Christoph, 53639 Königswinter (DE); Elsasser, Carsten, 50259 Pulheim (DE)
(74) Vertreter: Richly & Ritschel Patentanwälte PartG mbB

(56) Entgegenhaltungen:
- EP-A1- 2 468 477
- CN-A- 101 633 240
- DE-A1- 10 231 866
- DE-A1-102006 006 469
- DE-A1-102006 027 254
- DE-A1-102006 027 256
- DE-A1-102006 031 902

## Beschreibung

Die Erfindung betrifft ein Verfahren zur Herstellung von Hohlkörpern aus thermoplastischem Kunststoff umfassend die Ausformung von wenigstens zwei flächigen bahnförmigen Vorformlingen aus plastifiziertem thermoplastischem Kunststoff sowie eine Vorrichtung zur Durchführung des Verfahrens.

Die Erfindung betrifft insbesondere ein Verfahren zur Herstellung von Hohlkörpern aus thermoplastischem Kunststoff durch Extrusionsblasformen.

Beim Extrusionsblasformen von Kunststofferzeugnissen werden üblicherweise Formwerkzeuge verwendet, die zwei Formhälften umfassen, welche komplementär zueinander ausgebildet sind und gemeinsam ein Formnest bzw. eine Kavität begrenzen. Ein thermoplastisches Extrudat, meistens in Form eines Schlauchs, wird zwischen die geöffneten Hälften des Werkzeugs gebracht. Das Werkzeug schließt sich um den Vorformling, dieser wird innerhalb des Werkzeugs an die Innenwandung der von dem Werkzeug gebildeten Kavität angelegt, so dass der fertige Artikel eine äußere Gestalt aufweist, die der inneren Kontur des Formwerkzeugs entspricht. Die Umformung des Vorformlings innerhalb der Kavität des Werkzeugs erfolgt entweder durch Aufweitung des Vorformlings mittels Gasdruck oder Anlegen des Vorformlings an die Innenwandung des Werkzeugs mittels Unterdruck, der über Kanäle in der Formwandung aufgebracht wird.

Insbesondere bei der Herstellung von technischen Bauteilen wie Kraftstoffbehälter, die einstückig aus thermoplastischem Kunststoff hergestellt werden, ist es erforderlich, diverse Einbauteile in dem Hohlkörper zu befestigen. Aus verschiedensten Gründen ist es erforderlich und sinnvoll, die Einbauteile bereits bei der Herstellung des Hohlkörpers in diesen einzubringen. Bei der Herstellung von Hohlkörpern mittels des klassischen Extrusionsblasformens, bei welchem ein Extrudat in Form eines geschlossenen Schlauchs zwischen die geöffneten Hälften des Werkzeugs gebracht wird und der Schlauch innerhalb des geschlossenen Werkzeugs zu dem fertigen Hohlkörper aufgeweitet wird, kann das Einbringen der Einbauteile beispielweise durch sogenanntes "Umblasen" während der Herstellung erfolgen. Dabei werden die einzubringenden Bauteile vor dem Aufweiten des Schlauchs innerhalb des geschlossenen Werkzeugs mittels einer entsprechend ausgebildeten Halteeinrichtung in den Schlauch eingeführt und gegebenenfalls unter Zuhilfenahme weiterer beweglicher Bauteile innerhalb des Werkzeugs beim Anlegen des Vorformlings an die Wandung der Kavität an dieser befestigt. Diese Verfahren sind recht aufwändig und insbesondere bezüglich der späteren Lage und Anzahl der Einbauteile im fertigen Behälter relativ beschränkt. Bei Herstellung von Kraftstoffbehältern durch Extrusionsblasformen von schlauförmigen Extrudaten ist es daher nach wie vor erforderlich, bestimmte Einbauteile nach Fertigstellung des Behälters in diesem zu befestigen. Hierzu ist gegebenenfalls eine Verletzung der Behälterwandung erforderlich.

Beispielsweise zur Befestigung von Entlüftungsventilen, Sicherheitsventilen und dergleichen, ist es oftmals erforderlich, Auskreisungen bzw. Durchbrechungen der Behälterwandung vorzusehen, um diese an geeigneter Stelle sicher an der Behälterwandung fixieren zu können.

Bekanntlich sind die für die Herstellung von Kraftstoffbehältern verwendeten thermoplastischen Kunststoffe nicht vollständig beständig gegen Kohlenwasserstoffe, so dass die Behälterwandung als mehrschichtiges Extrudat mit Barriereschichten für Kohlenwasserstoffe ausgebildet sein muss. Alternativ kommen chemische Behandlungen der Behälterinnenwandung, beispielsweise Fluorieren oder Sulfonieren in Betracht. Jede Verletzung der Behälterwandung durch Herstellungen von Bohrungen, Auskreisungen oder dergleichen ist aus Gründen der geforderten Permeationsdichtigkeit für Kraftstoffbehälter nicht wünschenswert, da solche Öffnungen nachträglich aufwändig abgedichtet werden müssen.

Insbesondere vor dem Hintergrund der zuvor beschriebenen Problematik der Einbringung von Einbauteilen und Funktionsbauteilen in Kraftstoffbehälter für Kfz haben sich Verfahren zur Herstellung solcher Kraftstoffbehälter als besonders günstig erwiesen, bei welchen wenigstens zwei flächige bahnförmige Vorformlinge aus plastifiziertem thermoplastischem Kunststoff in einem mehrteiligen, ein Formnest bildenden Werkzeug mit zwei Außenformen und wenigstens einer Mittelform, die zueinander eine Öffnungs- und Schließbewegung vollziehen, umgeformt werden, wobei über die Mittelform bzw. den Kern Einbauteile an der Innenwandung des zu fertigenden Hohlkörpers befestigt werden. Hierzu werden die Werkzeuge zunächst um den Kern geschlossen. Einbauteile werden mittels des Kerns in einem vorgegebenen Layout an dem Vorformling befestigt, der Kern wird zwischen den Formhälften entfernt, die Formhälften dann erneut geschlossen und der Kraftstoffbehälter wird fertiggeblasen. Ein solches Verfahren ist beispielweise aus der WO 2007/088200 A1 bekannt. Ein weiteres vergleichbares Verfahren ist beispielsweise aus der EP 1 773 570 B1 bekannt. Schließlich ist ein solches Verfahren beispielsweise aus der US 6,866,812 B2 bekannt.

Die zuvor beschriebenen Verfahren bieten insbesondere den Vorzug, dass Einbauteile im Inneren des zu fertigenden Behälters in einem beliebigen Layout bei verhältnismäßig komplexen Strukturen des zu fertigenden Behälters an nahezu jeder beliebigen Stelle der Behälterwandung an dieser angebracht werden können, ohne dass dazu eine Verletzung der Behälterwandung im Sinne einer Durchstoßung, Durchbrechung oder Auskreisung erforderlich wäre.

Aus verschiedensten Gründen ist es bei der Anwendung solcher Verfahren vorteilhaft, auf die bis dato verfügbarer Extrusionstechnik zurückzugreifen, die auch beim klassischen Extrusionsblasformen aus dem Schlauch Anwendung findet. Dies ist insbesondere deshalb vorteilhaft, weil auf vorhandene Extruder und Extrusionsköpfe zurückgegriffen werden kann und weil verhältnismäßig einfache Möglichkeiten der radialen und axialen Wanddickensteuerung der Extrudate gegeben sind. Dies ist insbesondere bei der Coextrusion von mehrschichtigen Vorformlingen mit verhältnismäßig aufwändigen Schmelzführungen in den Extrusionsköpfen sinnvoll.

Aus diesem Grund wird beispielsweise in der US 6,866,812 B2 vorgeschlagen, einen extrudierten schlauchförmigen Vorformling an diametral gegenüberliegenden Stellen zu bahnförmigen, flächigen Vorformlingen aufzuteilen bzw. aufzutrennen und diese bahnförmigen Vorformlinge zwischen die geöffneten Teile des Werkzeugs zu verbringen, und zwar durch kontinuierliche Extrusion in Schwerkraftrichtung oberhalb des Werkzeugs.

Je nach Lage und Anordnung der in den Behälter einzubringenden Einbauteile muss der hierfür verwendete Kern eine verhältnismäßig große Bautiefe aufweisen, die letztendlich den Mindestabstand der voneinander zu führenden bahnförmigen Vorformlinge vorgibt. Aus diesem Grund ist es erforderlich, wie dies ebenfalls in der US 6,866,812 B2 beschrieben ist, die Vorformlinge mittels aufwändig konstruierter Rollenbahnen zu führen und mit Abstand zueinander zwischen den geöffneten Teilen des Werkzeugs zu halten.

Drüber hinaus gestaltet sich die Ausgestaltung des Kerns bzw. des Mittenwerkzeugs verhältnismäßig aufwändig. Dieses muss nämlich so beschaffen sein, dass es zusätzlich zum gegebenenfalls hydraulisch oder pneumatisch ein- und ausfahrbaren Bauteilhaltern, Heizeinrichtungen, Stempeln oder dergleichen auch eine sichere Abdichtung der Kavität des Werkzeugs ermöglicht. Schließlich muss das Mittenwerkzeug dem gesamten Schließdruck des Werkzeugs standhalten, da in der Regel beim Umformen und Ausformen der Vorformlinge zu Halbschalen in einem ersten Schritt ein Blasdruck von wenigstens 5 bar aufzubringen ist. Dadurch wird das benötigte Mittenwerkzeug verhältnismäßig teuer, nicht zuletzt deshalb, weil dieses vollständig in Werkzeugqualität ausgeführt sein muss.

Aus der DE 102 31 866 A1 ist ein mehrstufiges Verfahren zur Herstellung von Kunststoffhohlkörpern gemäß Oberbegriff von Anspruch 1 bekannt.

Ein ähnliches Verfahren ist aus der DE 10 2006 027 256 A1, die ebenfalls die Merkmale des Oberbegriffes des Anspruchs 9 offenbart, bekannt.

Schließlich ist aus der CN 101633240 A ein Verfahren bekannt, bei dem ebenso die Ausformung zweier flächiger bahnförmiger Vorformlinge aus plastifiziertem thermoplastischen Kunststoff in einen mehrteiligen, eine Kavität bildenden Werkzeug zu zwei komplementären Schalen sowie das Zusammenfügen der Schalen zu einem im Wesentlichen geschlossenen Hohlkörper bekannt ist. Bei dem aus dieser Druckschrift bekannten Verfahren ist zunächst vorgesehen, die Vorformlinge zwischen die Blasformhälften und einer zweiteiligen Schablone einzuspannen sowie mithilfe der Schablone die Vorformlinge zunächst in den Kavitäten des Blasformwerkzeugs auszuformen. In einem weiteren Verfahrensschritt werden mittels einer Handhabungsvorrichtung Einbauteile bei geöffneten Werkzeug an einer Schale innenseitig befestig, wobei die Handhabungsvorrichtung mittels eines Lifts von unten in das geöffnete Werkzeug verbracht wird.

Der Erfindung liegt daher die Aufgabe zugrunde, ein Verfahren zur Herstellung von Hohlkörpern, insbesondere von Kraftstoffbehältern, aus thermoplastischem Kunststoff aus flächigen bahnförmigen Vorformlingen bereitzustellen, das die zuvor erwähnten Nachteile vermeidet. Insbesondere soll das Verfahren einfacher sein und geringere Investitionskosten an die hierfür bereitzustellenden Vorrichtungen erfordern.

Die Aufgabe wird gelöst mit den Merkmalen des Anspruchs 1.

Unter Schließen im Sinne der Erfindung ist zumindest bei einem anfänglichen Schließen nicht notwendigerweise ein Schließen unter Aufbringung nennenswerter Schließkräfte zu verstehen. Hier genügt es vielmehr, die Werkzeuge so beizufahren, dass eine Abdichtung der Kavitäten erzielt wird, die ein Ausformen der Vorformlinge zu Schalen ermöglicht.

Die Bereitstellung der bahnförmigen Vorformlinge kann sowohl durch Auftrennen eines zuvor extrudierten Schlauchs an diametral gegenüberliegenden Stellen als auch durch Extrusion von bahnförmigen Vorformlingen aus zueinander beabstandeten Breitschlitzdüsen erfolgen. Hierzu kann beispielsweise ein Extrusionskopf gemäß DE 10 2006 042 065 A1 Anwendung finden, auf welche hier vollinhaltlich, auch zum Zwecke der Offenbarung, Bezug genommen wird.

Als Extrudate kommen bevorzugt Coextrudate aus thermoplastischem Kunststoff mit Barriereschichten für Kohlenwasserstoffe in Betracht. Im Rahmen der Erfindung ist allerdings auch die Verarbeitung von bahnförmigen Vorformlingen aus einschichtigen Extrudaten möglich. Bevorzugt werden die bahnförmigen Vorformlinge auf der Basis von HDPE extrudiert. Beispielweise kommen sechsschichtige Koextrudate mit HDPE als Basismaterial sowie mit EVOH als Barrierematerial in Betracht.

Das Verfahren umfasst in einer weiterhin bevorzugten Ausgestaltung die kontinuierliche Extrusion von wenigstens zwei flächigen bahnförmigen Vorformlingen in Schwerkraftrichtung oberhalb der geöffneten Teile des verwendeten Werkzeugs.

Nach dem Verfahren gemäß der Erfindung ist vorgesehen, dass die Verfahrenschritte Umformen und Ausformen der Vorformlinge zu schalenförmigen Elementen sowie Fügen von Einbauteilen an die Innenwandung der so hergestellten Schalen in zwei separaten Verfahrensschritten durchgeführt werden sowie werkzeugtechnisch funktional voneinander getrennt werden. So ist es lediglich erforderlich, für die Ausformung der Schalen unter Anwendung von Differenzdruck innerhalb der Kavität des Werkzeugs eine Abdichtung der Kavität des Werkzeugs derart zu bewirken, dass die zueinander komplementären Schalen nicht miteinander verschweißen.

Unter komplementär im Sinne der vorliegenden Offenbarung sind wenigstens zwei schalenförmige Bauteile zu verstehen, die jeweils derart zueinander passend ausgebildet sind, dass sie zusammengefügt bzw. zusammengesetzt den fertigen Hohlkörper ergeben.

Das erfindungsgemäße Verfahren hat insbesondere den Vorteil, dass zur Ausformung der Schalen lediglich ein einfacher Werkzeugteiler erforderlich ist, der nur eine Abdichtfunktion erfüllen muss. Die Bautiefe des Werkzeugteilers kann unabhängig von der Lage und Anordnung der in den Hohlkörper einzubringenden Einbauteile gestaltet sein, so dass ein Führen von oberhalb der Werkzeuge in Schwerkraftrichtung extrudierten lappen- oder bahnförmigen Vorformlingen nicht mehr erforderlich ist. Diese können mit dem durch den Extrusionskopf vorgegebenen Abstand zueinander extrudiert werden, ohne dass diese auf Abstand gehalten oder geführt werden müssten, insbesondere durch Verwendung von Rollenbahnen, Manipulatoren, Greifern, beheizten Stangen oder dergleichen. Dies ist insbesondere bei Verwendung eines Extrusionskopfs vorteilhaft, wie er in der DE 10 2006 042 065 A1 beschrieben ist, bei welchem ein schlauchförmiger Schmelzestrom des Koextrudats durch entsprechende Fließkanalausbildung innerhalb des Extrusionskopfs in zwei im wesentlichen flächige bahnförmige ebene Schmelzeströme aufgeteilt wird.

Das Einlegen und Ausformen der Vorformlinge in die Teilkavitäten der Teile des Werkzeugs kann entweder durch Aufbringen von Überdruck und/oder durch Aufbringung von Unterdruck über die Werkzeuge erfolgen. Hierzu können in den Werkzeugen Unterdruckkanäle oder Unterdrucköffnungen, beispielsweise in Form von porösen Bereichen vorgesehen sein.

Gemäß der Erfindung ist vorgesehen, dass die Einbauteile mittels eines zwischen die geöffneten Teile des Werkzeugs verbringbaren Bauteilträgers an den Schalen befestigt werden. Bevorzugt erfolgt die Ausformung der Schalen unter Ausnutzung der ersten Wärme des Extrudats, d.h. unter Ausnutzung der Plastifizierungswärme aus der Extrusion.

Bei einer besonders bevorzugten Variante des Verfahrens gemäß der Erfindung ist vorgesehen, dass die Einbauteile unter Ausnutzung der ersten Wärme des Extrudats an den Schalen befestigt werden, d.h. dass das Verbringen der Einbauteile bzw. Fügen der Einbauteile an die Innenwandung der Schalen, d.h. diejenige Wandung, die der Formwandung abgekehrt ist, im noch schmelzeheißen Zustand der Schalen. Beispielsweise können in diesem Zustand der Schalen die Einbauteile mit diesen vernietet oder verschweißt werden, gegebenenfalls unter Zuhilfenahme zusätzlicher Schweißenergie mittels IR-Strahlern oder unter Zuhilfenahme von Schweißspiegeln.

Bei einer weiteren zweckmäßigen Variante des Verfahrens gemäß der Erfindung kann unmittelbar nach der Ausformung der Schalen und vor dem Einbringen von Einbauteilen das Einbringen von zusätzlicher Wärmeenergie in die Schalen im Sinne einer Zwischenbeheizung vorgesehen sein. Eine solche zusätzliche Temperierung des noch warmplastischen Materials der Schalen kann beispielsweise mittels Strahlungswärme oder Heißluftbeaufschlagung (konvektiver Wärmeübergang) erfolgen.

Auch kann vorgesehen sein, während des Ausformens der Schalen oder unmittelbar nach dem Ausformen der Schalen vor dem Einbringen der Einbauteile Durchführungen in der Wandung der Schalen zur Einbringung von Schnittstellen vorzusehen. Solche Schnittstellen in Form von durch die Wandung der Schalen hindurchzuführenden Fittings können dann in dem folgenden Verfahrensschritt, bei welchem das Fügen der Einbauteile erfolgt, in die Schalen eingebracht werden.

Bei einer Variante des Verfahrens gemäß der Erfindung ist vorgesehen, dass die Einbauteile auf dem Bauteilträger in der vorgesehenen Einbaulage zueinander und/oder an den Schalen angeordnet werden, d.h., dass diese bereits entsprechend dem späteren Layout an den Behälterwandungen auf dem Bauteilträger arrangiert werden.

Gemäß der Erfindung ist vorgesehen, dass die Einbauteile unter Ausnutzung einer Schließbewegung der Werkzeuge an den Schalen befestigt werden. Das heißt, dass die Einbauteile statisch an dem Bauteilträger angeordnet sind und die Schließbewegung bzw. die Hubbewegung der Werkzeuge in Richtung auf den Bauteilträger zum Fügen der Einbauteile ausgenutzt wird.

Im Rahmen der Erfindung kann vorgesehen sein, dass auch beim Schließen der Teile des Werkzeugs gegen den Bauteilträger eine Abdichtung der Kavitäten erfolgt, um gegebenenfalls eine weitere Blasdruckbeaufschlagung und/oder Spülung der Kavität des Werkzeugs zu bewirken.

Bei einer zweckmäßigen Ausgestaltung des Verfahrens gemäß der Erfindung ist vorgesehen, dass als Werkzeugteiler ein Mittenrahmen oder eine Mittenplatte Anwendung findet, der beim Schließen der Werkzeuge die Schließkraft aufnimmt und mit welchem eine umlaufende Abdichtung der Kavität bewirkt wird.

Besonders zweckmäßig ist es, wenn der Werkzeugteiler und/oder Teile des Werkzeugs temperiert werden, um eine vorzeitige Abkühlung der miteinander zu verschweißenden Flansche der Schalen oder um eine zu starke Aufheizung der Flansche und ein Verkleben der Flansche mit dem Werkzeugteiler zu verhindern und um zu gewährleisten, dass die Schalen miteinander verschweißbar bleiben.

Wenn der Werkzeugteiler als Mittenrahmen/Abdichtrahmen ausgebildet ist, können innerhalb des Rahmens Heizeinrichtungen zur Zwischenheizung/ Zwischentemperierung der ausgeformten Schalen vorgesehen sein. Als Heizeinrichtungen kommen beispielsweise Infrarotstrahler oder Heißluftgebläse in Betracht. Optional können zusätzliche Funktionseinheiten beispielsweise zum Durchstoßen der Wandung der Schalen zwecks Herstellung von Schnittstellen zur Behälteraußenseite in dem als Mittenrahmen/Abdichtrahmen aufgebildeten Werkzeugteiler vorgesehen sein.

Wenn der Werkzeugteiler als Mittenrahmen/Abdichtrahmen ausgebildet ist, kann dieser beispielsweise mit abnehmbaren Kontur-Aufsatzstücken versehen sein, welche jeweils einen räumlich gekrümmten Verlauf der Abdichtkante entsprechend dem Verlauf der späteren Fügestellen der Schalen des Kraftstoffbehälters ausgebildet sind. Hierdurch ist es möglich, einen standardisierten Werkzeugteiler für unterschiedliche Werkzeuge mit unterschiedlichen Kavitäten bereitzustellen, der je nach herzustellendem Erzeugnis mit kundenspezifisch aufsetzbaren Kontur-Aufsatzstücken ausgerüstet wird.

Bei einer Variante des Verfahrens gemäß der Erfindung ist als Bauteilträger ein Kern vorgesehen, um welchen sich die Teile des Werkzeugs schließen können, um die Einbauteile in einem vorgegebenen Layout an die Schalen zu fügen. Vorzugsweise findet als Bauteilträger ein Mittenrahmen Anwendung, gegen welchen die Teile des Werkzeugs schließbar sind.

Wenn als Bauteilträger ein Mittenrahmen Anwendung findet, kann dieser Mittenrahmen grundsätzlich als geöffneter, d. h. seitlich zugänglicher Rahmen ausgebildet sein. Bei einer offenen Gestaltung des Bauteilträgers können wesentlich preiswertere Fügezylinder sowie eine wesentlich preiswertere Sensorik eingesetzt werden, da diese nicht mehr temperatur- und druckfest sein müssen. Die der Erfindung zugrundeliegende Aufgabe wird weiterhin gelöst durch eine Vorrichtung gemäß Anspruch 9 zur Durchführung des Verfahrens, die mehrteiliges Blasformwerkzeug mit wenigstens zwei Formhälften umfasst, die jeweils Teilkavitäten bilden, deren Kontur der Kontur der auszuformenden Schalen entspricht, mit wenigstens einem Werkzeugteiler, der quer zu einer Öffnungs- und Schließbewegung der Formhälften verfahrbar ist, wobei der Werkzeugteiler als Mittenrahmen oder Mittenplatte ausgebildet ist, die ausschließlich zur Aufnahme der Schließkraft der Formhälften und zur Abdichtung der Kavität des Blasformwerkzeugs ausgebildet ist. Ausschließlich im Sinne der vorstehenden Ausführungen bedeutet, dass der Werkzeugteiler keine Mittel zur Aufnahme und Befestigung von Einbauteilen in dem zu fertigenden Hohlkörper bzw. an den Schalen aufweist.

Bei der Vorrichtung gemäß der Erfindung ist wenigstens ein Bauteilträger vorgesehen, der quer zur Öffnungs- und Schließbewegung der Blasformhälften verfahrbar ist.

Der Bauteilträger und der Werkzeugteiler sind auf einem gemeinsamen Maschinengestell angeordnet.

Diese können beispielsweise mit einem festen Abstand zueinander auf dem Maschinengestell angeordnet sein, wobei das Maschinengestell relativ und quer zur Öffnungs- und Schließbewegung der Blasformhälften verfahrbar ist.

Alternativ sowie auch zusätzlich kann vorgesehen sein, dass der Bauteilträger und der Werkzeugteiler zueinander verfahrbar auf dem Maschinengestell angeordnet sind.

Das Verfahren gemäß der Erfindung wird nachstehend unter Bezugnahme auf die beigefügten Zeichnungen anhand eines Ausführungsbeispiels erläutert werden.

Es zeigen:
- Fig.1a: eine schematische Darstellung einer Vorrichtung gemäß der Offenbarung zu Beginn und zum Ende eines Fertigungszyklus,
- Fig.1b: eine Draufsicht auf die in Fig. 1 a gezeigte Anordnung,
- Fig.1c: einen Teilschnitt entlang der Linien C-C in Fig. 1
- Fig. 2: eine der Fig. 1b entsprechende Ansicht, bei welcher die Werkzeuge gegen einen zwischen den Vorformlingen angeordneten Werkzeugteiler geschlossen sind,
- Fig. 3: das Ausformen der Vorformlinge zu Schalen,
- Fig. 4: eine Draufsicht auf die geöffneten Werkzeuge nach dem Ausformen der Schalen,
- Fig.5: eine Ansicht der geöffneten Werkzeuge unmittelbar vor dem Einbringen der Einbauteile,
- Fig.6: eine Draufsicht auf die geschlossenen Werkzeuge beim Einbringen der Einbauteile,

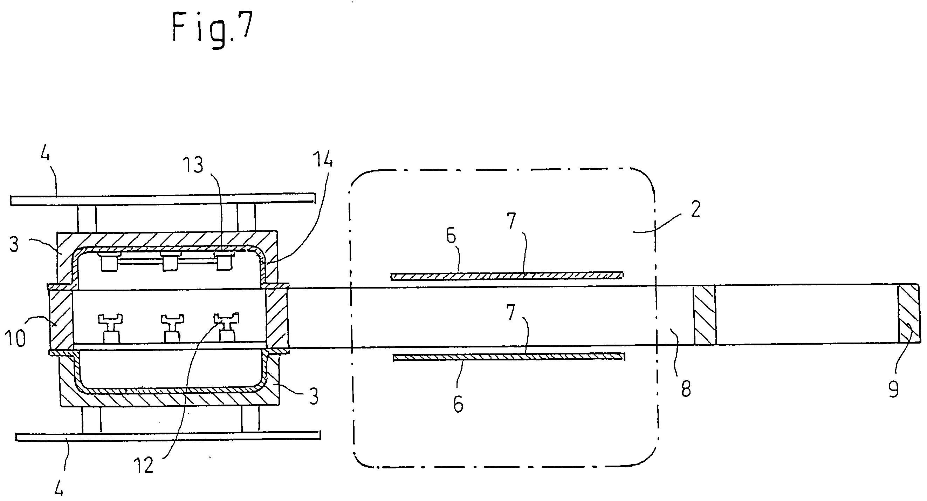

- Fig.7: eine Draufsicht auf die geschlossenen Werkzeuge nach dem Einbringen der Einbauteile,
- Fig. 8: eine Draufsicht auf die geöffneten Werkzeuge nach dem Einbringen der Einbauteile,
- Fig. 9a-9c: den Figuren 1a-1c entsprechende Ansichten unmittelbar vor dem Schließen der Werkzeuge zwecks Zusammenfügen der Schalen zu einem fertigen Artikel,
- Fig.10: eine Draufsicht auf die geschlossenen Werkzeuge mit dem fertigen Artikel,
- Fig.11a-11c: den Figuren 1a-1c entsprechende Ansichten, die die Entnahme des fertigen Artikeln veranschaulichen.

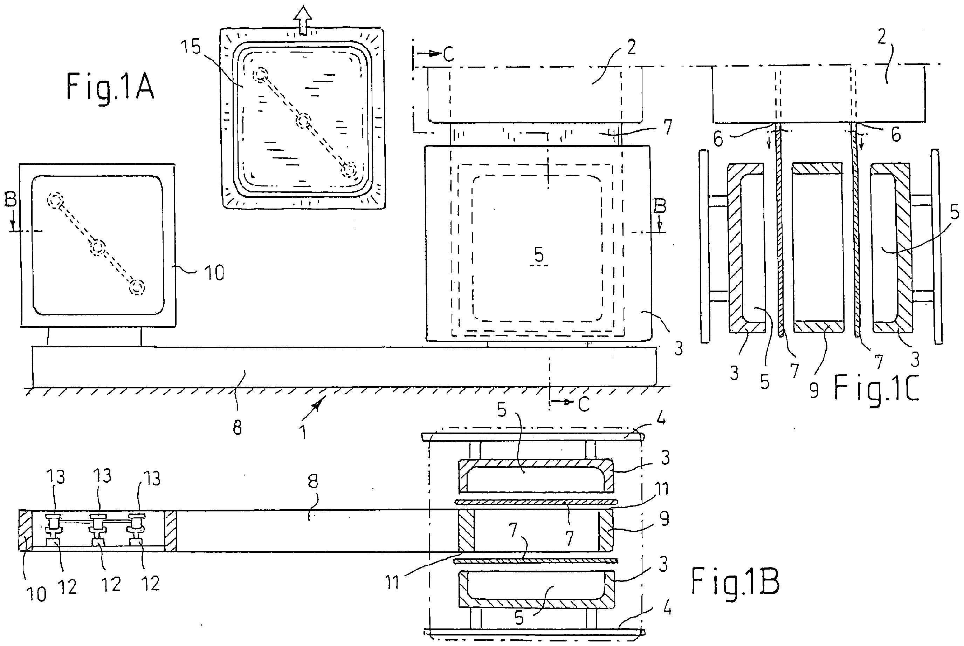

Es wird zunächst Bezug genommen auf die Figuren 1a-1b, die eine schematische Ansicht eines Blasformwerkzeugs 1 und eines Extrusionskopfes 2 zur Durchführung des erfindungsgemäßen Verfahrens zeigen. Das Blasformwerkzeug 1 umfasst zwei Blasformhälften 3, die in bekannter Art und Weise an Formaufspannplatten 4 befestigt sind und im Sinne einer Öffnungs- und Schließbewegung voneinander weg und aufeinander zu bewegbar sind. Obwohl vorstehend der Begriff Blasformhälften verwendet wurde, ist es im Rahmen der Erfindung, wenn die einzelnen, jeweils Teilkavitäten 5 bildenden Werkzeugteile mehrteilig ausgebildet sind. Jede der Blasformhälften 3 muss nicht notwendigerweise die Hälfte des Werkzeugs bzw. des Formnests/der Kavität bilden. Auch muss die Teilungsebene der Blasformhälften 3 nicht notwendigerweise die geometrische hälftige Teilung des Werkzeugs bilden.

Die Formaufspannplatten 4 sind Teil eines nicht näher gezeigten Maschinengrundgestells, welches bezüglich des ortfest angeordneten Extrusionskopfs 2 verfahrbar ist, wie dies in den Zeichnungen angedeutet ist.

Der Extrusionskopf 2 ist in den Zeichnungen stark vereinfacht dargestellt, dieser umfasst zwei Breitschlitzdüsen 6, aus denen jeweils lappenförmige bzw. bahnförmige, sich in die Zeichnungsebene hinein gradlinig erstreckende Vorformlinge 7, hängend, d.h. in Schwerkraftrichtung kontinuierlich extrudiert werden. Die Vorformlinge 7 bestehen vorzugsweise jeweils aus einem insgesamt sechsschichtigen Extrudat umfassend eine rußeingefärbte äußere HDPE-Schicht, eine Rezyklat (Regrind)-Schicht auf HDPE-Basis, eine beidseitig von Haftvermittler umgebende EVOH-Barriereschicht sowie eine weitere nicht eingefärbte HDPE-Schicht. Die Haftvermittlerschichten können beispielsweise auf LDPE-Basis ausgebildet sein.

Das Blasformwerkzeug 1 umfasst neben dem nicht dargestellten Maschinengrundgestell ein Maschinengestell 8, welches bezüglich des Maschinengrundgestells und quer zur öffnungs- und Schließbewegung der Formaufspannplatten 4 verfahrbar ist. Auf dem Maschinengestell 8 sind mit Abstand zueinander ein Werkzeugteiler 9 sowie ein Bauteilträger 10 angeordnet.

Der Werkzeugteiler 9 ist im wesentlichen als Abdichtrahmen ausgebildet, dessen umlaufenden Dichtflächen 11 eine umlaufende Kontur definieren, die etwa der Begrenzung der Teilkavitäten 5 der Blasformhälften 3 folgt.

Der Bauteilträger 10 ist ebenfalls als Mittenrahmen ausgebildet, innerhalb dessen einzelnen Bauteilaufnahmen 12 in Form von pneumatischen Kolben-Zylinderanordnungen mit Befestigungsmitteln angeordnet sind.

In den Zeichnung ist die Bautiefe des Werkzeugteilers 9 und des Bauteilträgers bzw. Mittenrahmens 11 etwa gleich dargestellt, und zwar aus Vereinfachungsgründen. Tatsächlich ist die Bautiefe des Werkzeugteilers 9 geringer als die des Bauteilträgers 10. Der Werkzeugteiler 9 kann einfachstenfalls als einfache Platte, gegebenenfalls mit Mitteln zur Blasdruckbeaufschlagung der Kavität, ausgebildet sein.

Der Abstand zwischen dem Bauteilträger 10 und dem Werkzeugteiler 9 auf dem Maschinengestell 8 entspricht etwa (größer oder gleich) der Breite des Schließgestells bzw. der Formaufspannplatten 4.

Wie bereits erwähnt, kann auch vorgesehen sein, den Bauteilträger 10 und den Werkzeugteiler 9 relativ zueinander auf dem Maschinengestell verfahrbar anzuordnen. Der Verfahrweg muss in diesem Falle größer oder gleich der Breite der Formaufspannplatten 4 sein.

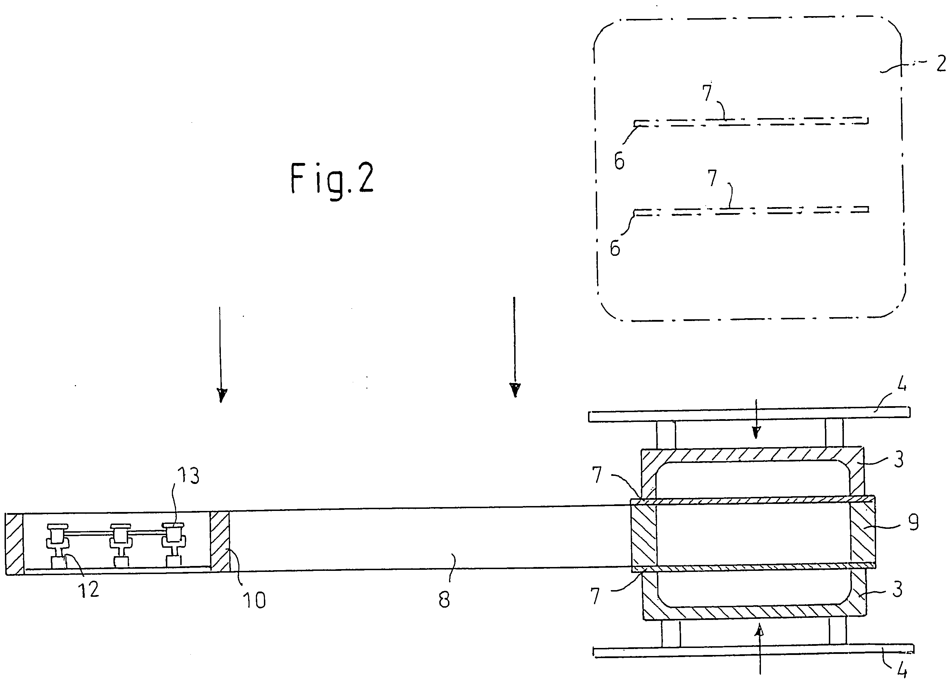

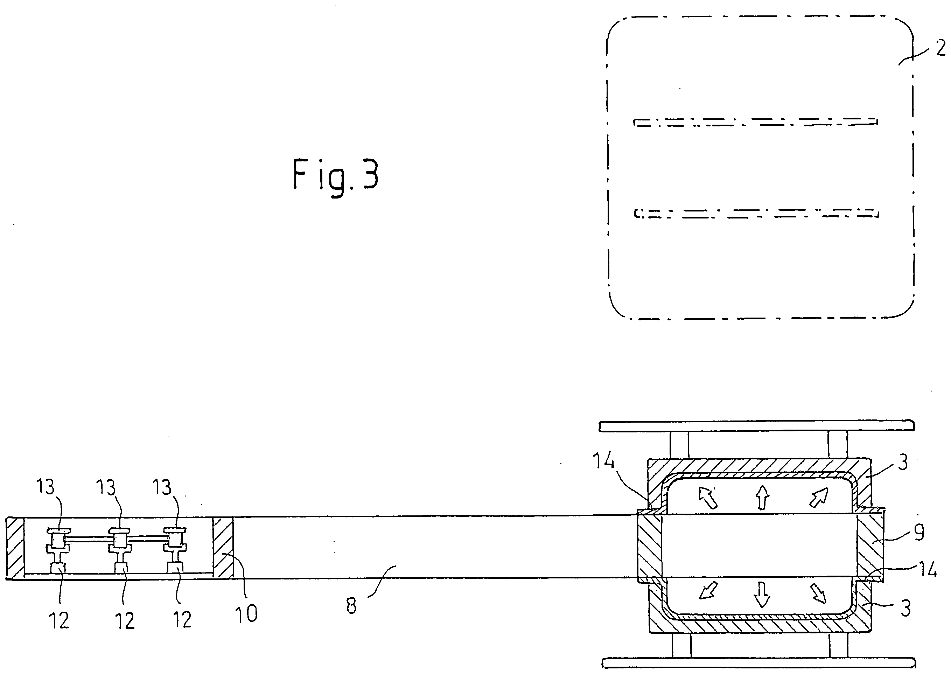

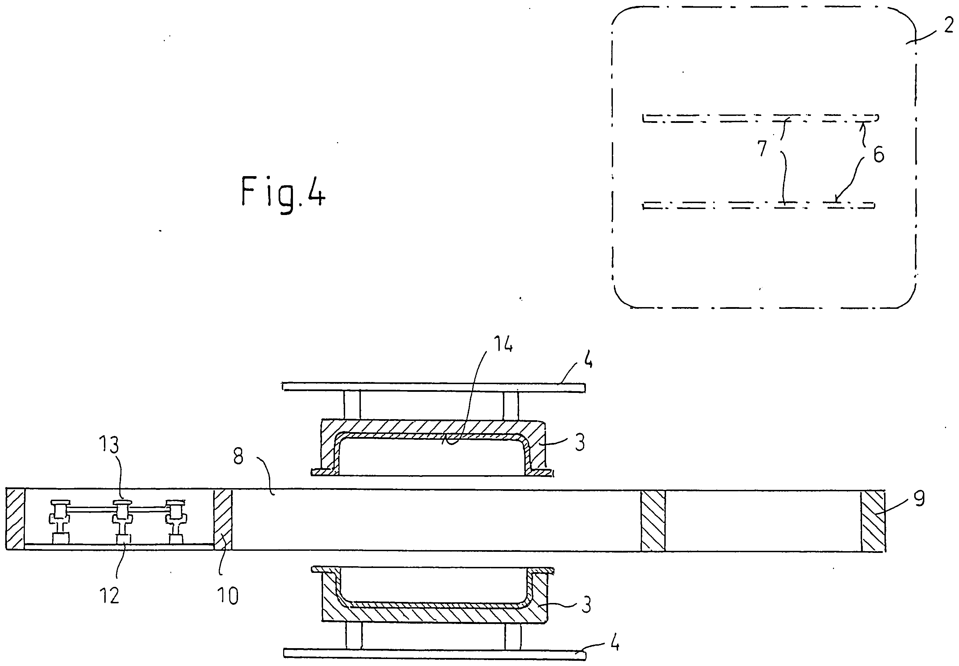

Die Fig. 1a-1b zeigen das Blasformwerkzeug 1 zum Ende bzw. zu Beginn eines jeden Arbeitszyklus. Ein solchen Arbeitszyklus umfasst zunächst die Extrusion der Vorformlingen 7 kontinuierlich auf eine Länge, die etwa der Höhe des Blasformhälften 3 entspricht, wie dies in Fig. 1c dargestellt ist. Die Vorformlinge 7 werden zwischen die geöffneten Blasformhälften 3 extrudiert und zwar jeweils zwischen eine Blasformhälfte 3 und den zwischen den Blasformhälften 3 angeordneten Werkzeugteiler 9. In einem weiteren, in der Fig. 2 dargestellten Verfahrensschritt schließen sich die Blasformhälften 3 gegen den zwischen diesen angeordneten Werkzeugteiler 9 unter Abquetschen und/oder Abtrennen der Vorformlinge 7 am Extrusionskopf 2, gegebenenfalls unter Zuhilfenahme weiterer Werkzeuge zum Trennen des kontinuierlich extrudierten Vorformlings 7. Dieser Schließbewegung der Blasformhälften 3 überlagert ist eine Verfahrbewegung des Maschinengrundgestells unter dem Extrusionskopf weg, wie dies in Fig. 2 andeutungsweise dargestellt ist. Die Kavität bzw. das Formnest des Blasformwegzeugs 1 wird geschlossen, der Werkzeugteiler 9 nimmt dabei die Schließkräfte der Blasformhälften 3 auf und dichtet gleichzeitig die Kavität des Blasformwerkzeugs 1 ab. Sodann werden die Vorformlinge 7 unter Anwendung von Vakuum und/oder Überdruck in die Teilkavitäten 5 der Blasformhälften 3 angelegt und ausgeformt, wie dies in Fig. 3 dargestellt ist. Die Blasformhälften werden geöffnet und bezüglich des Maschinengestells 8 in der Draufsicht nach links verfahren, wie dies in Fig. 4 dargestellt ist. Dabei ist unerheblich, ob das Maschinengestell 8 bezüglich des Maschinengrundgestells und bezüglich der Blasformhälften 3 verfahrbar ist oder ob die Blasformhälften 3 und die Formaufspannplatten 4 bezüglich des Maschinengestells 8 verfahrbar sind. Dies ist wahlfrei und kommt auf den verfügbaren Aufstellplatz für das Blasformwerkzeug 1 und des Extrusionskopfs 2 an.

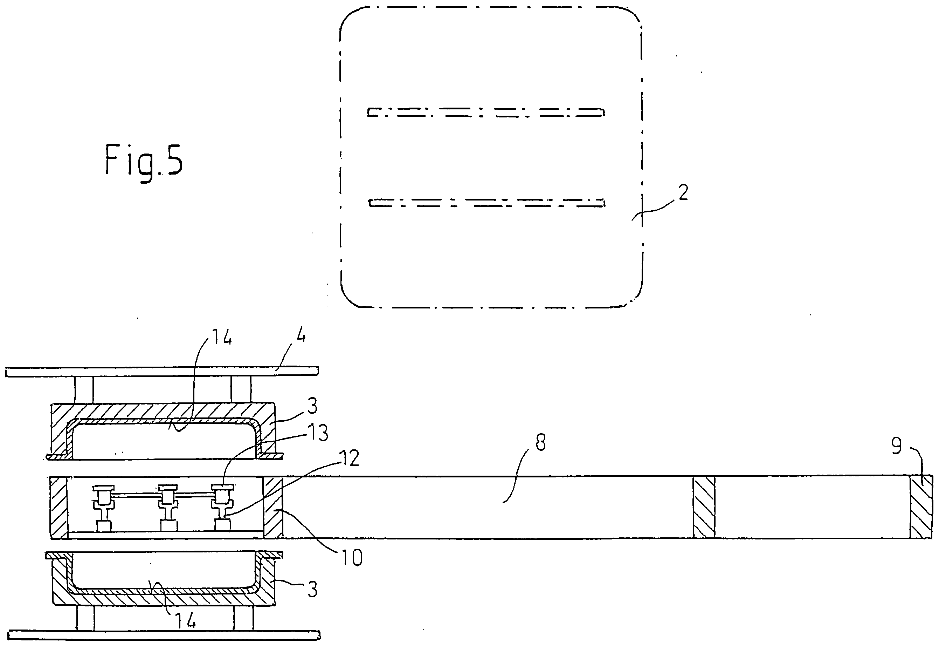

In einem weiteren Verfahrensschritt (Fig. 5) wird der Bauteilträger 10 zwischen die Blasformhälften 3 platziert. Sodann werden die Blasformhälften 3 erneut geschlossen. Ein vollständiges Schließen der Blasformhälften 3 während dieses Vorgangs im Sinne einer Abdichtung ist nicht erforderlich. Der Schritt des Schließens der Blasformhälften 3 gegen den Bauteilträger 10 ist daher nur optional.

In einem weiteren Verfahrensschritt werden die Bauteilaufnahmen 12 innerhalb des Bauteilträgers 10, die zu Beginn des Arbeitszyklus mit Einbauteilen 13 bestückt wurden, in Richtung auf die in den Teilkavitäten 5 ausgebildeten Schalen 14 verfahren. Die Einbauteile 13 werden unter Aufwendung von Kraft aus der Hubbewegung der Bauteilaufnahmen 12 gegen die Schalen 14 gefügt bzw. an diesen befestigt.

In den Zeichnungen ist dieser Vorgang bezogen auf eine Schale 14 dargestellt, die Erfindung ist so zu verstehen, dass Einbauteile 13 an einer oder beiden Schalen 14 befestigt werden können.

Eine solche Befestigung kann beispielsweise durch Nieten in der Art erfolgen, wie es beispielsweise in der deutschen Patentanmeldung DE 10 2006 006 469 A1 beschrieben ist, auf welche hier auch zum Zwecke der Offenbarung vollinhaltlich Bezug genommen wird.

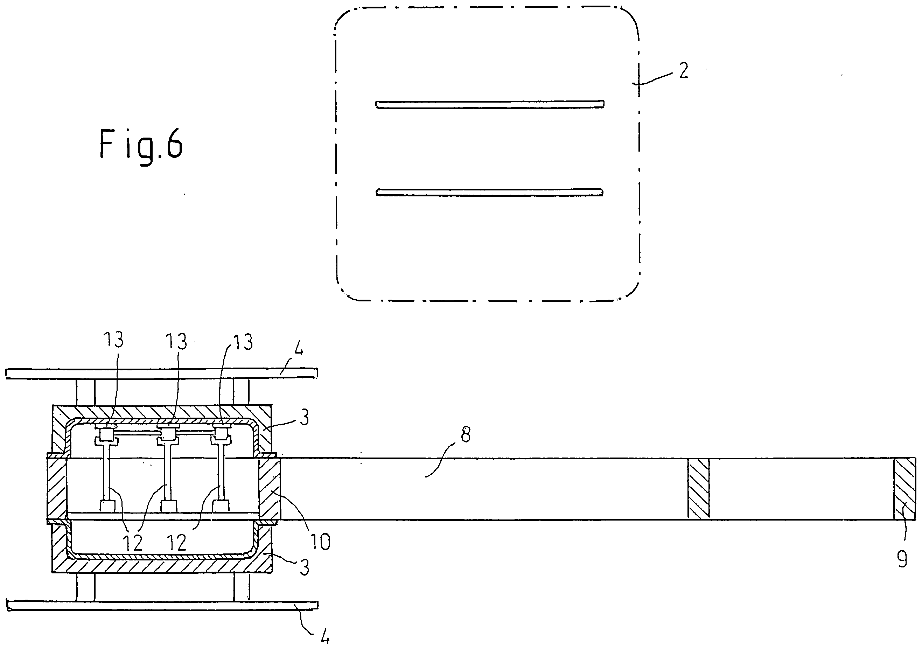

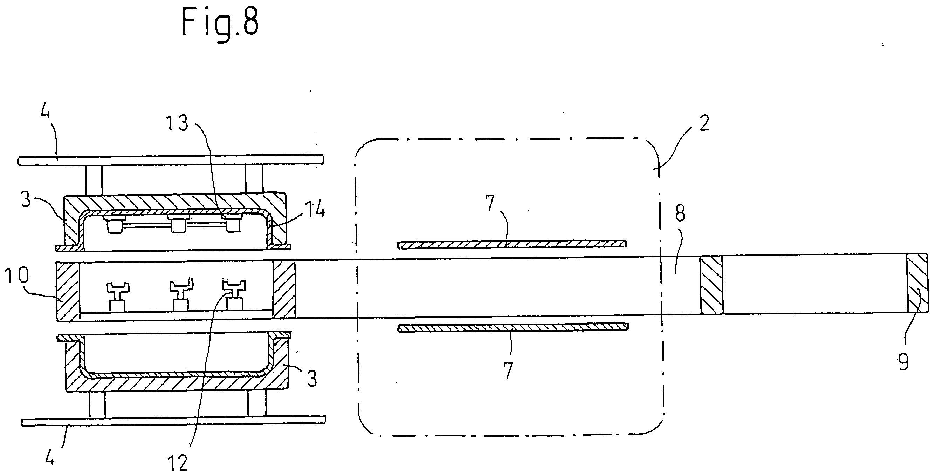

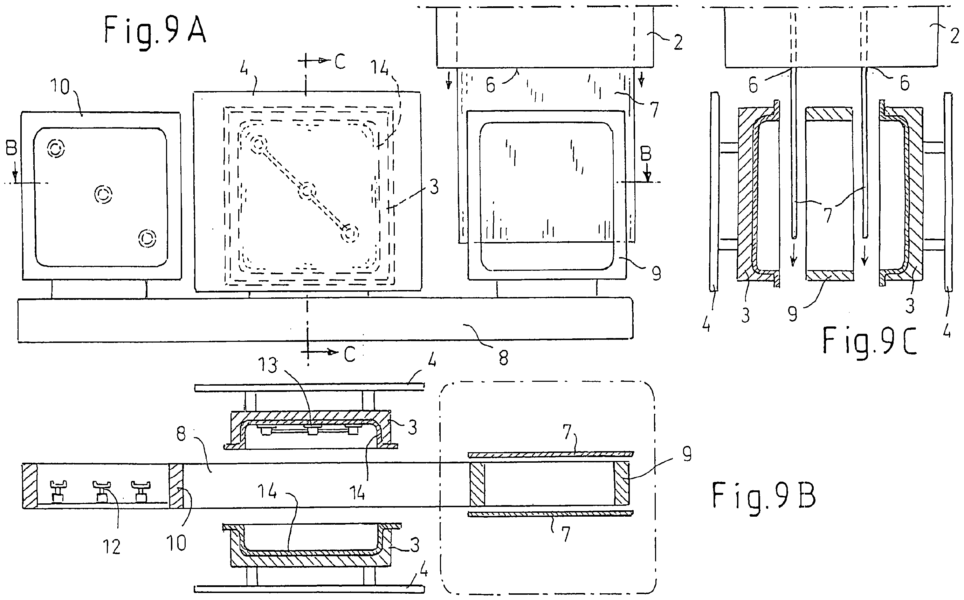

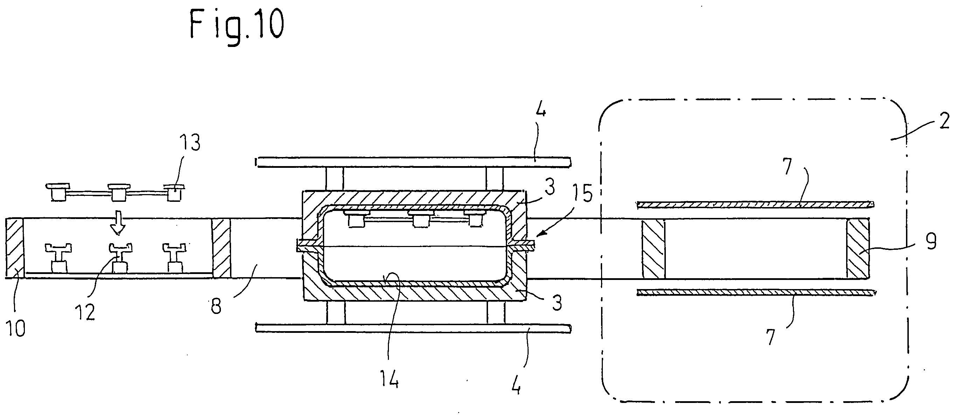

Schließlich werden die Bauteilaufnahmen 12 in ihre Ausgangslage zurückgefahren (Fig. 6), das Blasformwerkzeug 1 wird geöffnet, d.h. die Blasformhälften 3 auseinandergefahren (Fig. 8). Die Formaufspannplatten 4 werden in die in Fig. 9b gezeigte Ausgangsstellung zwischen dem Werkzeugteiler 9 und dem Bauteilträger 10 verfahren, sodann vollziehen die Blasformhälften eine Schließbewegung, bei welcher die in diesen angeordneten Schalen 14 randseitig miteinander verschweißt werden (Fig. 10). Währenddessen ist bereits der Werkzeugteiler 9 zwischen den Vorformlingen 7 (weiterer Zyklus) platziert. Unterdessen erfolgt eine Bestückung der Bauteilaufnahmen 12 mit Einbauteilen 13.

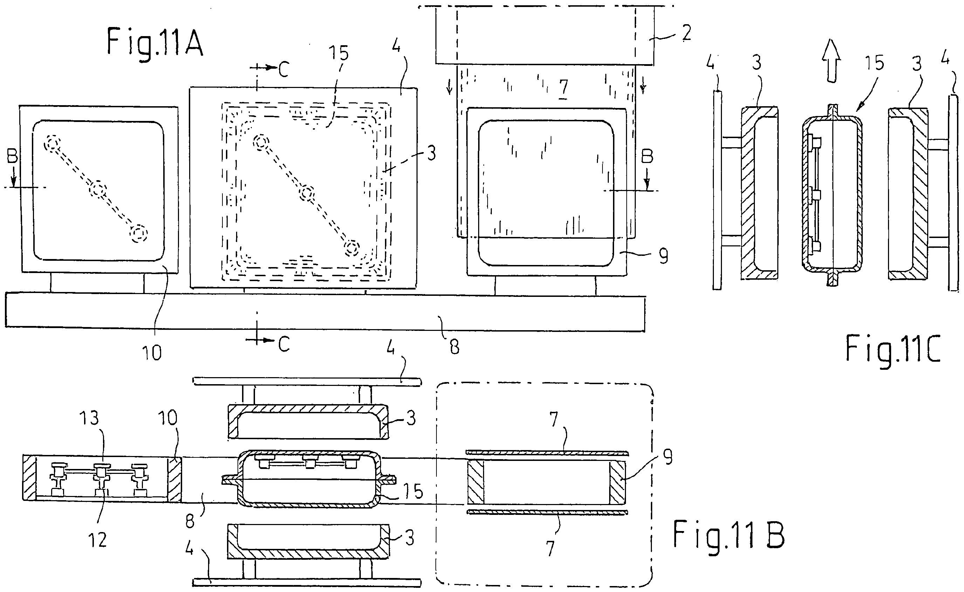

Schließlich werden die Blasformhälften 3 geöffnet (Fig. 11b) und der fertige mit Einbauteilen 13 versehene Artikel in Form eines Kraftstoffbehälters 15 wird nach oben aus dem geöffneten Werkzeug entnommen (Fig. 11b, Fig. 1a).

### Bezugszeichenliste

- 1: Blasformwerkzeug
- 2: Extrusionskopf
- 3: Blasformhälften
- 4: Formaufspannplatten
- 5: Teilkavitäten
- 6: Breitschlitzdüsen
- 7: Vorformlinge
- 8: Maschinengestell
- 9: Werkzeugteiler
- 10: Bauteilträger
- 11: Dichtflächen
- 12: Bauteilaufnahmen
- 13: Einbauteile
- 14: Schalen
- 15: Kraftstoffbehälter (Artikel)

## Patentansprüche

1. Verfahren zur Herstellung von Hohlkörpern aus thermoplastischem Kunststoff umfassend die Ausformung von wenigstens zwei flächigen, bahnförmigen Vorformlingen (7) aus plastifiziertem thermoplastischem Kunststoff in einem mehrteiligen, eine Kavität bildenden Werkzeug (1) zu zwei zueinander komplementären Schalen (14) sowie das Zusammenfügen der Schalen zu einem im wesentlichen geschlossenen Hohlkörper (15), wobei die Vorformlinge zwischen geöffnete, jeweils Teilkavitäten aufweisende Teile des Werkzeugs verbracht werden, die Teile des Werkzeugs sodann gegen einen zwischen den Vorformlingen angeordneten Werkzeugteiler (9) geschlossen werden und die Vorformlinge unter Anwendung von Differenzdruck in die Teilkavitäten eingelegt und ausgeformt werden, in einem weiteren separaten Verfahrensschritt die Werkzeuge wieder geöffnet werden und an wenigstens einer Schale Einbauteile (13) des zu fertigenden Hohlkörpers befestigt werden und schließlich die Schalen durch erneutes Schließen der Werkzeuge zu einem geschlossenen Hohlkörper zusammengefügt werden, **dadurch gekennzeichnet, dass** die Einbauteile mittels wenigstens eines zwischen die geöffneten Teile des Werkzeugs verbringbaren Bauteilträgers (10) an der Schale befestigt werden und dass die Einbauteile unter Ausnutzung einer Schließbewegung der Werkzeuge an der Schale befestigt werden.

2. Verfahren nach Anspruch 1, **dadurch gekennzeichnet, dass** die Ausformung der Schalen unter Ausnutzung der ersten Wärme des Extrudats erfolgt.

3. Verfahren nach Anspruch 1 oder 2, **dadurch gekennzeichnet, dass** die Einbauteile unter Ausnutzung der ersten Wärme des Extrudats an der Schale befestigt werden.

4. Verfahren nach einem der Ansprüche 1-3, **dadurch gekennzeichnet, dass** die Einbauteile auf dem Bauteilträger in der vorgesehenen Einbaulage zueinander und/oder an der Schale angeordnet werden.

5. Verfahren nach einem der Ansprüche 1-4, **dadurch gekennzeichnet, dass** als Werkzeugteiler wenigstens ein Mittenrahmen oder eine Mittenplatte Anwendung findet, welcher beim Schließen der Werkzeuge die Schließkraft aufnimmt und mit welchem eine umlaufende Abdichtung der Kavität bewirkt wird.

6. Verfahren nach einem der Ansprüche 1-5, **dadurch gekennzeichnet, dass** der Werkzeugteiler und/oder Teile des Werkzeugs temperiert werden.

7. Verfahren nach einem der Ansprüche 1-6, **dadurch gekennzeichnet, dass** als Bauteilträger ein Kern vorgesehen ist, um welchen sich die Teile des Werkzeugs schließen können, um die Einbauteile in einem vorgegebenen Layout an die Schale zu fügen.

8. Verfahren nach einem der Ansprüche 1-7 **dadurch gekennzeichnet, dass** als Bauteilträger ein Mittenrahmen Anwendung findet, gegen welchen die Teile des Werkzeugs schließbar sind.

9. Vorrichtung zur Durchführung des Verfahrens nach einem der Ansprüche 1-8, umfassend ein mehrteiliges Blasformwerkzeug (1) mit wenigstens zwei Formteilhälften (3), die jeweils Teilkavitäten (5) bilden, deren Kontur der Kontur der auszuformenden Schalen (14) entspricht, mit wenigstens einem Werkzeugteiler (9), der quer zu einer Öffnungs- und Schließbewegung der Formhälften verfahrbar ist, wobei der Werkzeugteiler als Mittenrahmen oder Mittenplatte ausgebildet ist, die ausschließlich zur Aufnahme der Schließkraft der Formhälften und zur Abdichtung der Kavität des Blasformwerkzeugs (1) ausgebildet ist, **gekennzeichnet durch** wenigstens einen zusätzlichen Bauteilträger (10), der quer zur Öffnung- und Schließbewegung der Blasformhälften (3) verfahrbar ist, wobei der Bauteilträger (10) und der Werkzeugteiler (9) auf einem gemeinsamen Maschinengestell (8) angeordnet sind.

10. Vorrichtung nach Anspruch 9, **dadurch gekennzeichnet, dass** der Bauteilträger (10) und der Werkzeugteiler (9) mit Abstand zueinander auf dem Maschinengestell (8) angeordnet sind und dass das Maschinengestell (8) und die Blasformhälften (3) relativ zu einander verfahrbar sind.

11. Vorrichtung nach Anspruch 9 oder 10, **dadurch gekennzeichnet, dass** der Bauteilträger (10) und der Werkzeugteiler (9) relativ zueinander verfahrbar auf dem Maschinengestell (8) angeordnet sind.

## Claims

1. Method for producing hollow bodies from thermoplastic material, comprising the molding of at least two sheet-like, web-shaped preforms (7) of plasticated thermoplastic material in a multi-part tool (1) forming a cavity to form two complementary shells (14), and also the joining together of the shells to form a substantially closed hollow body (15), wherein the preforms are brought between open parts of the tool which each have part-cavities, the parts of the tool are then closed against a tool separator (9) arranged between the preforms, and the preforms are inserted into the part-cavities with the use of differential pressure and molded, in a further separate method step the tools are reopened and internal components (13) of the hollow body to be produced are fastened to the shells, and finally the shells are joined together by reclosing the tools to form a closed hollow body, **characterized in that** the internal components are fastened to the shells by means of at least one component carrier (10) which can be brought between the open parts of the tool and that the internal components are fastened to the shells using a closing movement of the tools.

2. Method according to Claim 1, **characterized in that** the shells are molded using the first heat of the extrudate.

3. Method according to one of Claims 1 or 2, **characterized in that** the internal components are fastened to the shells using the first heat of the extrudate.

4. Method according to one of Claims 1-3, **characterized in that** the internal components are arranged on the component carrier in the intended installation position in relation to one another and/or on the shells.

5. Method according to one of Claims 1-4, **characterized in that** the tool separator used is at least one central frame or a central plate, which absorbs the closing force when the tools are being closed and brings about circumferential sealing of the cavity.

6. Method according to one of Claims 1-5, **characterized in that** the temperature of the tool separator and/or parts of the tool is controlled.

7. Method according to one of Claims 1-6, **characterized in that** the component carrier provided is a core, around which the parts of the tool can close in order to join the internal components to the shells in a predefined layout.

8. Method according to one of Claims 1-7, **characterized in that** the component carrier used is a central frame, against which the parts of the tool can be closed.

9. Device for carrying out the method according to one of Claims 1-8, comprising a multi-part blow molding tool (1) having at least two mold halves (3), which each form part-cavities (5) with a contour that corresponds to the contour of the shells (14) to be molded, and having at least one tool separator (9) which can be moved transversely to an opening and closing movement of the mold halves, wherein the tool separator is in the form of a central frame or central plate, which is designed exclusively to absorb the closing force of the mold halves and to seal the cavity of the blow molding tool (1), **characterized by** at least one additional component carrier (10), which can be moved transversely to the opening and closing movement of the blow mold halves (3), wherein the component carrier (10) and the tool separator (9) are arranged on a common machine frame (8).

10. Device according to Claim 9, **characterized in that** the component carrier (10) and the tool separator (9) are arranged on the machine frame (8) at a distance from one another, and **in that** the machine frame (8) and the blow mold halves (3) can be moved in relation to one another.

11. Device according to Claim 9 or 10, **characterized in that** the component carrier (10) and the tool separator (9) are arranged on the machine frame (8) such that they can move in relation to one another.

## Revendications

1. Procédé de fabrication de corps creux en une matière thermoplastique, comprenant le façonnement d'au moins deux préformes plates en forme de bande (7) en une matière thermoplastique plastifiée dans un outil (1) en plusieurs parties, formant une cavité, en deux coques complémentaires l'une de l'autre (14), ainsi que l'assemblage des coques en un corps creux essentiellement fermé (15), les préformes étant placées entre des parties ouvertes de l'outil, présentant chacune des cavités partielles, les parties de l'outil étant ensuite fermées contre un diviseur d'outil (9) agencé entre les préformes, et les préformes étant insérées dans les cavités partielles et façonnées sous l'application d'une pression différentielle, les outils étant de nouveau ouverts lors d'une étape de procédé séparée supplémentaire, et des pièces d'insert (13) du corps creux à fabriquer étant fixées sur au moins une coque, et les coques étant enfin assemblées en un corps creux fermé par une nouvelle fermeture des outils, **caractérisé en ce que** les pièces d'insert sont fixées sur la coque au moyen d'au moins un support de composant (10) pouvant être placé entre les parties ouvertes de l'outil, et **en ce que** les pièces d'insert sont fixées à la coque en utilisant un mouvement de fermeture des outils.

2. Procédé selon la revendication 1, **caractérisé en ce que** le façonnage des coques a lieu en utilisant la première chaleur de l'extrudat.

3. Procédé selon la revendication 1 ou 2, **caractérisé en ce que** les pièces d'insert sont fixées à la coque en utilisant la première chaleur de l'extrudat.

4. Procédé selon l'une quelconque des revendications 1 à 3, **caractérisé en ce que** les pièces d'insert sont agencées sur le support de composant à la position d'insertion prévue les unes par rapport aux autres et/ou sur la coque.

5. Procédé selon l'une quelconque des revendications 1 à 4, **caractérisé en ce qu'**au moins un cadre central ou une plaque centrale est utilisé en tant que diviseur d'outil, qui absorbe la force de fermeture lors de la fermeture des outils et avec lequel une étanchéification périphérique de la cavité est réalisée.

6. Procédé selon l'une quelconque des revendications 1 à 5, **caractérisé en ce que** le diviseur d'outil et/ou des parties de l'outil sont régulés en température.

7. Procédé selon l'une quelconque des revendications 1 à 6, **caractérisé en ce qu'**un noyau est prévu en tant que support de composant, autour duquel les parties de l'outil peuvent se fermer, afin de joindre les parties d'insert selon un agencement prédéterminé sur la coque.

8. Procédé selon l'une quelconque des revendications 1 à 7, **caractérisé en ce qu'**un cadre central est utilisé en tant que support de composant, contre lequel les parties de l'outil peuvent être fermées.

9. Dispositif pour la réalisation du procédé selon l'une quelconque des revendications 1 à 8, comprenant un outil de moulage par soufflage en plusieurs parties (1), comprenant au moins deux moitiés de moule (3), qui forment chacune des cavités partielles (5), dont le contour correspond au contour des coques à façonner (14), avec au moins un diviseur d'outil (9), qui peut être déplacé perpendiculairement à un mouvement d'ouverture et de fermeture des moitiés de moule, le diviseur d'outil étant configuré sous la forme d'un cadre central ou d'une plaque centrale, qui est configuré exclusivement pour l'absorption de la force de fermeture des moitiés de moule et pour l'étanchéification de la cavité de l'outil de moulage par soufflage (1), **caractérisé par** au moins un support de composant (10) supplémentaire, qui peut être déplacé perpendiculairement au mouvement d'ouverture et de fermeture des moitiés du moule de soufflage (3), le support de composant (10) et le diviseur d'outil (9) étant agencés sur un châssis de machine commun (8).

10. Dispositif selon la revendication 9, **caractérisé en ce que** le support de composant (10) et le diviseur d'outil (9) sont agencés à une distance l'un de l'autre sur le châssis de machine (8), et **en ce que** le châssis de machine (8) et les moitiés du moule de soufflage (3) peuvent être déplacés relativement les uns par rapport aux autres.

11. Dispositif selon la revendication 9 ou 10, **caractérisé en ce que** le support de composant (10) et le diviseur d'outil (9) sont agencés de manière à pouvoir être déplacés relativement l'un par rapport à l'autre sur le châssis de machine (8).
